# EUROPEAN PATENT APPLICATION

(11) **EP 3 964 313 A1**
(43) Date of publication of application: **09.03.2022**
(21) Application number: 21194402.0
(22) Date of filing: 01.09.2021
(51) Int. Cl.: B23C 3/12, B27D 5/00, B27G 17/02

(54) **HAND TOOL FOR MACHINING THE LEAF OF A WINDOW OR DOOR AND USE THEREOF AND COMBINATION OF A HAND TOOL AND A LEAF**

(30) Priority: 04.09.2020 BE 202005612
(71) Applicant: SOBINCO, naamloze vennootschap, 9870 Zulte (BE)
(72) Inventor: VAN PARYS, Emmanuel Diederich Camille, 9790 Wortegem-Petegem (BE)
(74) Representative: Donné, Eddy

(57) **Abstract**

Tool (11) for machining a frame (2) of a window or door, whereby the frame (2) is composed of profiles (3) mitred together and which are provided with a fitting groove (5) that is delimited by two upright legs (7) which on the sides facing each other are provided with ribs (8) for mounting a fitting (9) which slideably fits in the fitting groove (5), **characterised in that** it contains a housing (13) with a base piece (13a) for attachment on the frame (2) and a mobile part (13b) movably mounted thereon in which a tool (14) is mounted with bearings and which from a resting position is movable in the direction of the corner to an end position in which parts of the fitting groove (5) are sufficiently removed with a rotating tool (14) to sufficiently open the fitting groove (5) in the corner to slide in a fitting (9) from the outside of the frame (2) in an axial direction.

## Description

The present invention relates to a hand tool for machining the leaf of a window or door, particularly for opening a fitting groove along the contour of the leaf with a view to sliding in the fitting of the leaf.

In particular, the invention is intended for a tool for a leaf with a frame composed of profiles from aluminium or the like which are mitred together in the corners.

Typically the profiles are provided with an undercut fitting groove along the outer contour of the leaf which continues in the corners and which is delimited by a bottom and by two upright legs on the outer contour which on the sides facing each other are provided with an inwardly oriented rib.

Such fitting groove, also called euro groove, is typical and has practically standardised dimensions which are practically identical for all profile series and is intended for mounting a slideable fitting therein, for example for operating the closing mechanism of the window or the door by means of an operating crank, the motion of which is transferred to slats slideably mounted in the fitting groove.

The fitting is typically applied after the frame of the leaf is composed.

To be able to slide the fitting parts via the corners of the leaf in the fitting groove in an axial direction, the fitting groove needs to be opened in the corners of the mitre: this means that a part of the inwardly oriented ribs on the upright legs of the fitting groove in the corners of the leaf needs to be removed because otherwise they continue into the mitre and thus prevent being able to slide in the fitting parts.

Currently this is done by machining the mitred constituent profiles of the leaf beforehand before the frame of the leaf is composed and the profiles are glued together in the corners.

This is done at the windows or doors manufacturer by means of a punching operation at the ends of the profile or currently also by means of a CNC-milling operation, if the window manufacturer works with an automated machine centre with for example a saw and a milling cutter or a combination.

Often, problems occur when sliding in the fitting after the composition of the profiles of the frame of the leaf; said problems can be caused because the punching was not deep enough or because glue residues ended up between the profiles and are not always easy to clean in the fitting groove, or because the profiles in the mitre joint shifted a couple of tenths of a millimetre relative to each other, such that the bottom of one profile in the fitting groove protrudes more relative to the bottom of the other profile, which can form an obstacle for sliding the fitting in said other profile.

The result is that time is often lost during mounting due to adjusting or cleaning the opening of the fitting groove in the corners of the frame of the leaf.

The purpose of the present invention is to provide a solution to the aforementioned and other disadvantages.

To this end, the invention relates to a hand tool for opening, cleaning and possibly freeing the fitting groove, also with a shifted mitre of the fitting groove, whereby the tool contains a housing and a machining implement that is rotatively mounted in the housing with bearings and whereby the housing contains at least two parts, a base piece for attaching the tool across the fitting groove along the outer contour of a corner of the frame to be machined and a mobile part movably mounted thereon in which the implement is mounted with bearings respectively and which, in a mounted condition of the tool on the frame, from a resting position in which the implement is removed from said corner is movable in the direction of the corner for removing the ribs and/or the upright edges of the mitre in the corner to an end position of the mobile part in which parts of the fitting groove are sufficiently removed with a rotating implement to sufficiently open the fitting groove of both profiles at the same time in the corner to slide in a fitting from the outside of the frame in an axial direction.

Hand tool here refers to a tool which can be operated manually for machining the frame without additional equipment for positioning and holding and operating the tool.

This provides the advantage that the tool can be used for opening the fitting groove after the frame of the leaf is mounted.

The tool is then mounted with the base piece on the outer contour of the leaf across the corner of the leaf to be machined in a lateral direction.

Subsequently, the machining implement is rotatively driven and together with the mobile part of the housing moved in the direction of the corner to be machined to thus remove the inwardly oriented ribs which delimit the fitting groove from both profiles to a sufficient depth to make the fitting groove accessible from the outside to be able to slide in the fitting in an axial direction of the fitting groove.

In the case of a shifted mitre the tool can be used to at the same time remove the bottom of the fitting groove which protrudes more relative to the bottom of the other profile.

When using the tool, the fitting groove of both connected profiles is opened at the same time and any hard glue or silicone residues are removed.

This provides the advantage that the profiles mitred together in the corner do not all have to be machined beforehand separately, but can be opened together in one single motion and this in the final composed mitre such that no account needs to be taken of possible mounting errors.

Four operations can thus be realised in one operation with the tool: punching each end of the profiles twice, removing the glue residues, possibly aligning the mitre.

Consequently, opening the fitting groove can be done more quickly as only four corners need to be machined instead of eight profile ends.

Preferably the base piece is provided with support parts defining two support surfaces which define an open inner corner of the base piece with an opening angle corresponding with the mitre angle of the corner of the frame to be machined.

The tool is placed with the support surfaces of the base piece against the outer contour of the corner of the leaf to be machined, for example on the level of the bottom of the fitting groove. Thus the tool can always be mounted in the same way at the right distance from, and in the right position against, the corner to be machined.

Preferably, the support parts are provided with a hitching edge or other hitching parts with which the base piece can be hitched behind one of the inwardly oriented ribs of the fitting groove, for example, for using the tool.

In this way the tool when in use is held firmly and securely in place and the right position of the implement in the width direction of the fitting groove is always fixed as well.

Preferably, the mobile part is mounted slideably on the base piece, for example by means of one or more guides which run parallel with the median plane of the inner corner of the base piece, such that the implement in the mobile part can be moved towards the corner by moving the mobile part.

Preferably, the rotation axis of the implement lies in the median plane of the open inner corner of the base piece.

In this way the fitting groove is removed on either side of the median plane to an equal extent.

Preferably, the geometric rotation axis is parallel with the theoretical intersecting line of the support surfaces of the base piece.

Preferably, the implement has a thickness along its machining outer contour that is equal to or slightly more than the distance between the upright legs of the fitting groove for which the tool is intended.

In this way the inwardly oriented ribs on the upright legs of the fitting groove are definitely removed up to the relevant legs, such that no part remains that could be in the way for sliding in the fitting in an axial direction.

In the example, said thickness D of the implement is less than the distance between the sides facing away from each other of the upright legs of the fitting groove, such that, after using the tool, at least a certain thickness of the mitred adjoining upright legs remains, such that the fitting remains well guided up into the corners between the remaining sections of the relevant upright legs.

However, it is not excluded that the thickness of the implement is more than the breadth of the fitting groove on the outsides of the upright legs of the fitting groove, this to be certain that in the corners the adjoining upright legs are removed over their entire thickness, such that no sharp corners of the upright legs remain on which one could hurt oneself.

Preferably, the axial position of the implement along the geometric rotation axis is such that, with the tool in a mounted use condition, the machining outer contour of the implement is centered relative to the breadth of the fitting groove.

According to a preferred characteristic, the movable part of the housing is provided with a stop which, when using the tool, determines said end position of the movable part relative to the corner of the frame to be machined.

In this way it is possible to ensure that material is always removed to the desired necessary depth and that it is prevented in other words that too much material would be removed.

According to another aspect, the machining tool is incorporated in a chamber of the base piece with a bottom and an upright wall around the implement and an upper wall with a passage for the drive of the rotative implement.

Thus the implement is securely enclosed and protected in said chamber of the housing.

The bottom is for example formed by a removable lid, such that the tool is easily accessible for replacement and any remaining chips in the chamber can be easily cleaned.

Preferably, the chamber is round or with rounded corners and it is provided with a tangentially mounted discharge for the chips that are produced when the tool is used.

An advantage is that the chips are evacuated directly from the chamber and thus cannot accumulate in the chamber.

The discharge can for example be connected to a vacuum cleaner or collection reservoir or the like, such that the chips can be collected and it is therefore possible to always work cleanly and it is avoided that any chips lying around would scratch the windows.

The tool can be provided with its own drive for the implement or can be intended to be mounted on an existing implement such as on an angle grinder or the like.

The housing may be manufactured with a 3D-printer, which combined with the fact that it can be mounted on an existing tool, ensures that the tool can be purchased with a limited investment.

The invention also relates to a combination of an aluminium frame of a leaf of a window or door and of a hand tool for machining a corner of the frame, whereby the frame is composed of profiles which are mitred together in the corners of the frame and whereby the profiles along the outer contour of the frame are provided with an undercut fitting groove which is delimited by a bottom and by two upright legs which on the sides facing each other are provided with an inwardly oriented rib which during the mounting of the frame continues up to the mitre of the corners and are provided for mounting a window or door fitting which slideably fits in the fitting groove, characterised in that the tool contains a housing and a machining implement that is rotatively mounted with bearings in the housing, whereby the housing contains at least two parts, respectively a base piece for attaching the tool across the fitting groove along the outer contour of the corner of the frame to be machined and a mobile part movably mounted thereon in the form of an angle grinder in which the implement is mounted with bearings and which, in a mounted condition of the tool on the frame, from a resting position in which the implement is removed from said corner is movable in the direction of the corner to remove the ribs and/or upright edges of the mitre in the corner up to an end position of the mobile part in which parts of the fitting groove are sufficiently removed with a rotating implement to sufficiently open the fitting groove of both profiles at the same time in the corner to slide in a fitting from the outside of the frame in an axial direction.

The invention also relates to the use of a tool according to the invention for machining a corner of an aluminium frame of a leaf of a window or door, whereby the frame is composed of profiles which in the corners of the frame are mitred together and whereby the profiles along the outer contour of the frame are provided with an undercut fitting groove which is delimited by a bottom and by two upright legs which on the sides facing each other are provided with an inwardly oriented rib which during the mounting of the frame continues up to the mitre of the corners and are provided for mounting a window or door fitting which slideably fits in the fitting groove, characterised in that the tool is used for opening the fitting groove in the corner of the frame by mounting the tool in resting condition with the base piece across the fitting groove along the outer contour of the corner to be machined with the implement removed from the corner and by subsequently moving the mobile part with the rotating implement from said resting position in the direction of the corner to remove the ribs and/or upright edges of the mitre in the corner up to an end position of the mobile part in which parts of the fitting groove are sufficiently removed to sufficiently open the fitting groove of both profiles at the same time in the corner to slide in a fitting from the outside of the frame in an axial direction.

With the intention of better showing the characteristics of the invention, hereinafter, by way of an example without any limiting nature, a preferred embodiment is described of a tool according to the invention for machining the leaf of a window or door and of the use thereof in combination with a frame to be machined, with reference to the accompanying drawings, wherein:
figure 1 schematically shows a perspective view of a corner of a leaf of a window;
figure 2 shows a lateral view according to the arrow F2 in figure 1;
figure 3 shows a tool according to the invention;
figure 4 shows the tool of figure 3 viewed more from the bottom;
figure 5 shows an exploded view of the tool of figures 3 and 4, with the underside upwards;
figure 6 shows a top view according to arrow F6 in figure 3;
figures 7 and 8 are cross-sections respectively according to lines VII-VII and VIII-VIII in figure 6;
figure 9 shows the tool of figures 3 and 4 ready for use in a mounted condition over the corner of a frame as that of figure 1;
figure 10 shows a cross-section according to line X-X in figure 9;
figures 11 and 12 show a cross-section as that of figure 10, during consecutive steps of the use of the tool respectively;
figure 13 shows the tool in the position of figure 10 but without housing;
figure 14 shows the result of the use of the tool according to the invention on a corner of a frame of a leaf.

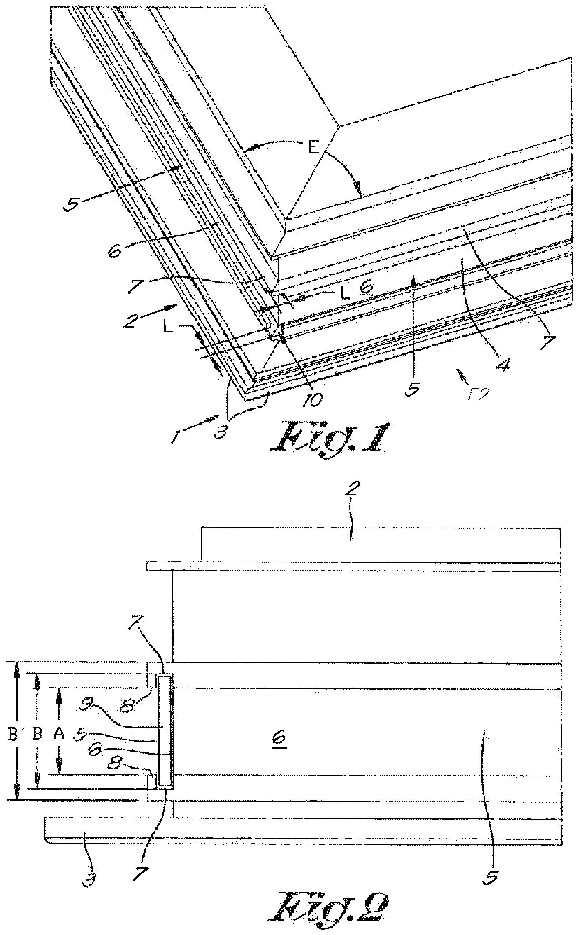

Figure 1 shows a corner 1 of a frame 2 of a leaf which is intended to be movably mounted in a fixed frame of a window (not shown) and which is composed of profiles 3 in aluminium or the like which are mitred together in a corner, for example with glue.

In the example, a corner with a square mitre E of 90° is shown, although this can also be different.

Along the outer contour 4 of the frame 2 the profiles 3 are provided with an undercut fitting groove 5 which is delimited by a bottom 6 and by two upright legs 7 which on the sides facing each other are provided with inwardly oriented ribs which together delimit the opening of the fitting groove 5.

Figure 2, by way of example, shows a cross-section of such a profile 3 provided with an euro groove with standardised dimensions, with a fitting 9 therein in the form of a fitting slat which, as is known, is slideably mounted in the fitting groove 5 in an axial direction and which, for example, is slideable by rotating a window crank for the operation of the closing mechanism of the window.

The dimensions of the euro groove like the breadth A of the opening between the ribs 8, the distance B between the upright legs 7, etc. are practically standardised.

After mounting the frame 2 the fitting 9 is slid into the fitting groove 5 via openings 10 made in the corners of the frame 2 by, as shown in figure 1, removing the inwardly oriented ribs 8 on either side of the fitting groove 5 over a small length L of, for example, 4.5 to 5 mm, to sufficiently open the fitting groove 5 in the corners to be able to slide in the fitting 9 from the outside in the longitudinal direction of the fitting groove 5.

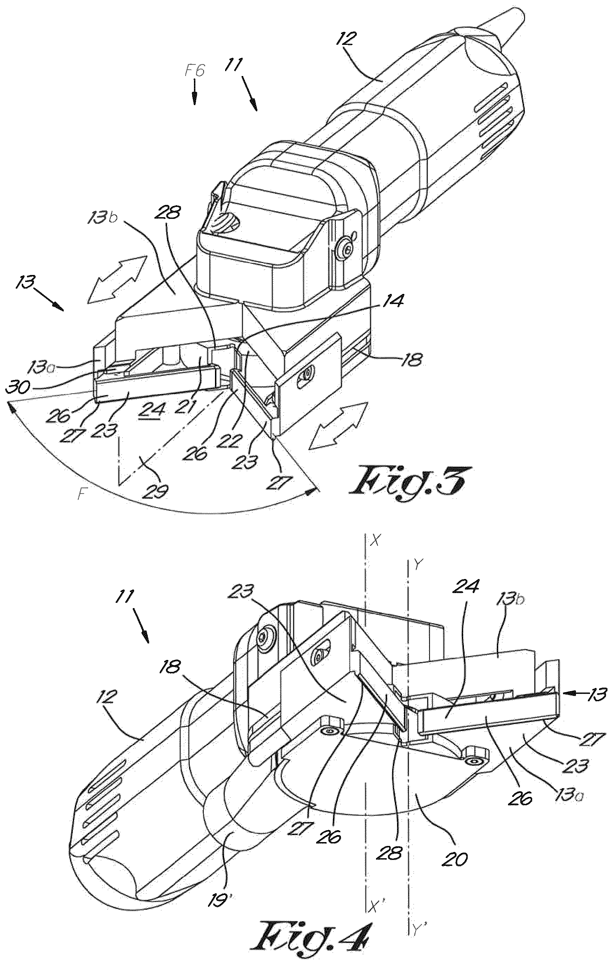

Figures 3 and 4 show a possible embodiment of a hand tool 11 according to the invention with which the fitting groove 5 in the corners of a composed frame can be opened.

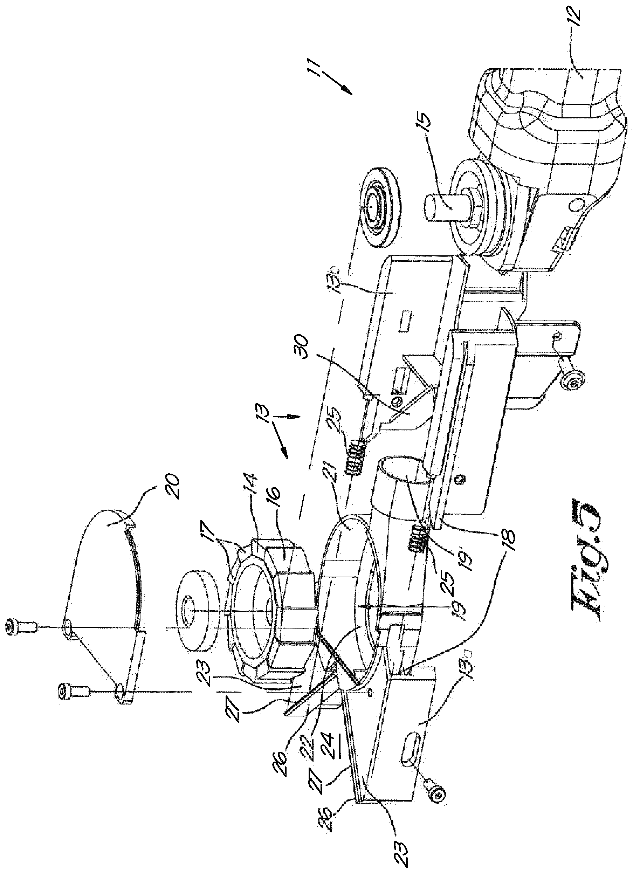

To this end the tool 11 is mounted over the corner to be opened as shown in figure 5.

In this case the tool 11 contains a drive 12 in the form of a classic angle grinder and a housing 13 mounted thereon with a machining implement 14 therein such as a milling cutter or the like which is mounted on the drive shaft 15 of the drive 12 in the traditional manner and is mounted with bearings around a geometric rotation axis X-X'.

The machining implement 14 has a machining outer contour 16, for example, with teeth 17, with a thickness D and a constant cross-section over said entire thickness D.

The tool contains a housing 13 which in the example is executed in two parts, with a base piece 13a for attaching the tool 11 on the frame 2 and a mobile part movably mounted thereon 13b which in this case is slideably mounted on the base piece by means of guides 18.

The base piece 13a of the housing 13 is provided with an internal chamber with a bottom 20, an upright wall 21 and an upper wall 22 with a passage therein for the drive shaft 15 which is perpendicular to the upper surface 22 and to the direction of the guides 18.

Preferably, the form of the chamber is round or oval and such that the implement therein can move forward and backward and connects to a tangentially oriented discharge 19' for the chips which end up in the chamber 19 when the tool is used.

The discharge 19' is for example provided with a hose for connection to a collector or a vacuum cleaner or the like.

The bottom 20 is for example formed by a removable lid.

In the example the housing 13 is detachable from the drive 12, whereby the housing 13 can be adapted for mounting specifically to a certain type of angle grinder or other drive 12 or can be provided with universal mounting means to mount the tool 11 to several types of drive. It goes without saying that the tool 11 can also have its own integrated drive 12.

Along the outside of the upright wall 21 the base piece 13a is provided with two protruding jaws 23 which together define an open inner corner 24 of the base piece 13a with an opening angle F corresponding with the angle E of the mitre of the corner 1 of the frame 2 to be machined, in this case a straight angle as is mostly the case in traditional windows.

Between the base piece 13a and the mobile part 13b of the housing 13 there can be a spring 25 which pushes away the mobile part 13b at rest from the inner corner 24.

The inner corner 24 of the base piece 13a is delimited by two support surfaces 26 or by support parts defining such support surfaces and are intended to support and position the tool 11 when used against the outer contour 4 of the frame 2.

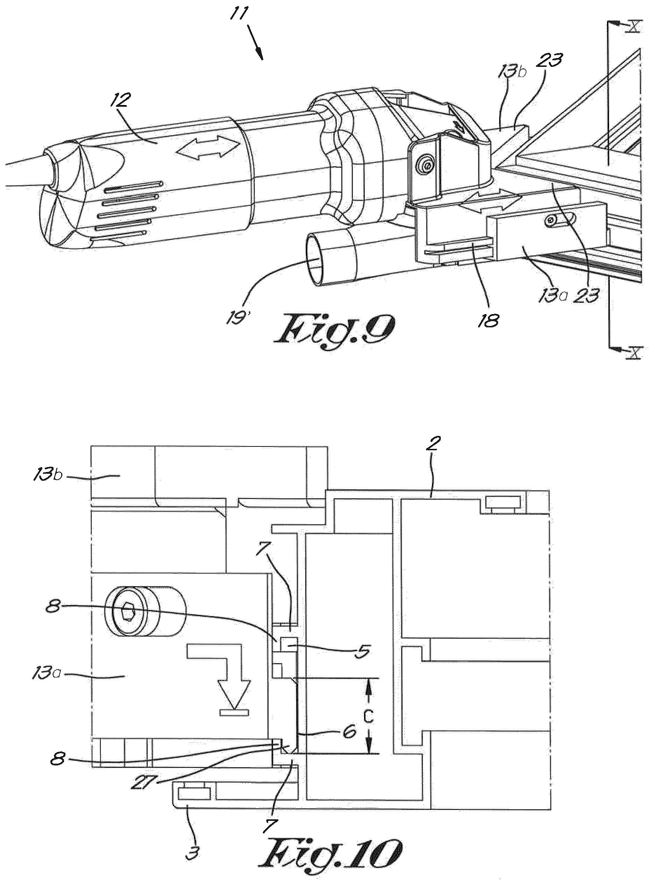

In the example shown the breadth C of the support surfaces 26 is less or equal to the breadth A of the opening of the fitting groove 5 between the inwardly oriented ribs 8, with the intention of letting the base piece 13a, when the tool 11 is used, rest on the bottom 6 of the fitting groove 5 with the support surfaces 26 as shown in figure 10.

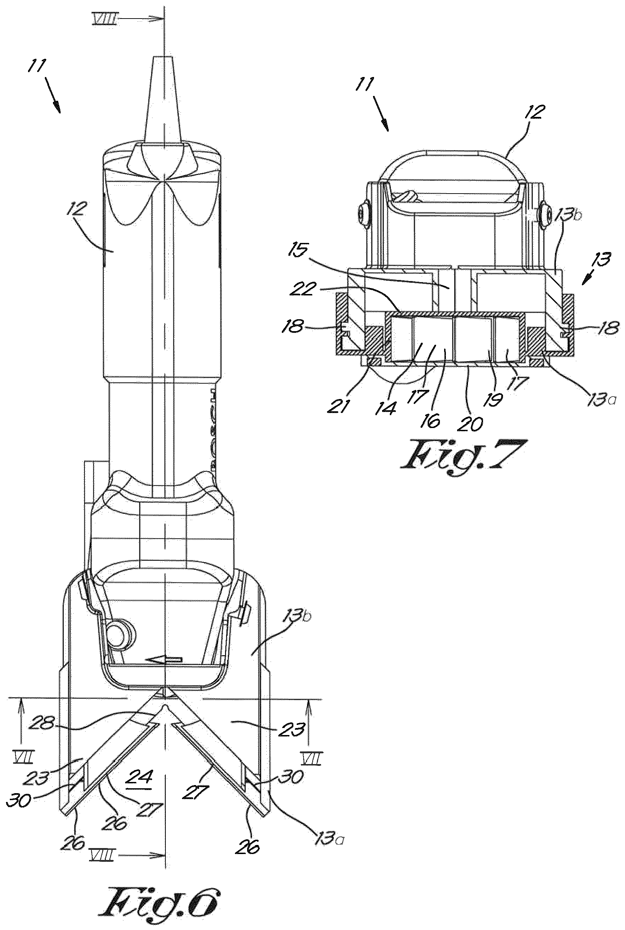

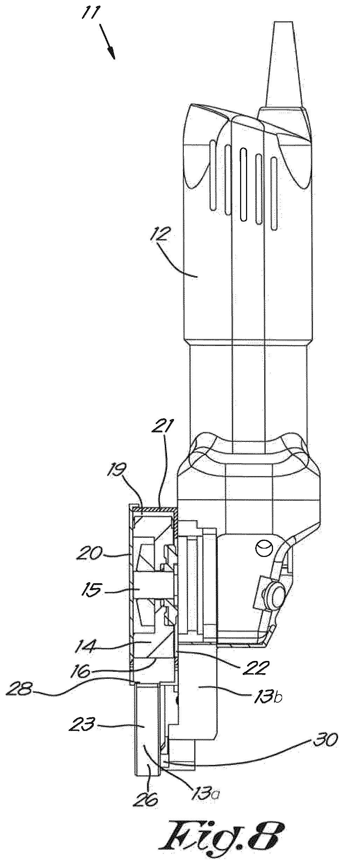

Preferably, the support surfaces 26 or support parts are provided with a hitching edge 27 or other hitching parts with which the base piece 13a can be hitched and positioned behind one of the ribs 8 of the fitting groove 5 for the use of the tool 11 as shown in the figures 7 and 8.

In the example shown the hitching edge 27 is facing downwards, i.e. oriented away from the drive in the direction Y-Y' and protruding slightly under the underside of the jaws 23.

On the level of the inner corner 24, the base piece 13a of the housing 13 is provided with a cut-away 28 which ensures that the fitting groove 5 in the corner 1 of the frame 2 is not covered by the base piece 13a of the mounted tool 11.

Said cut-away 28 interrupts the upright wall 21 of the chamber 19 and the support surfaces or support parts 26 and continues a little in the bottom 20 and in the upper wall 22 of the chamber 19 and extends on either side of the median plane 29 of the inner corner 24.

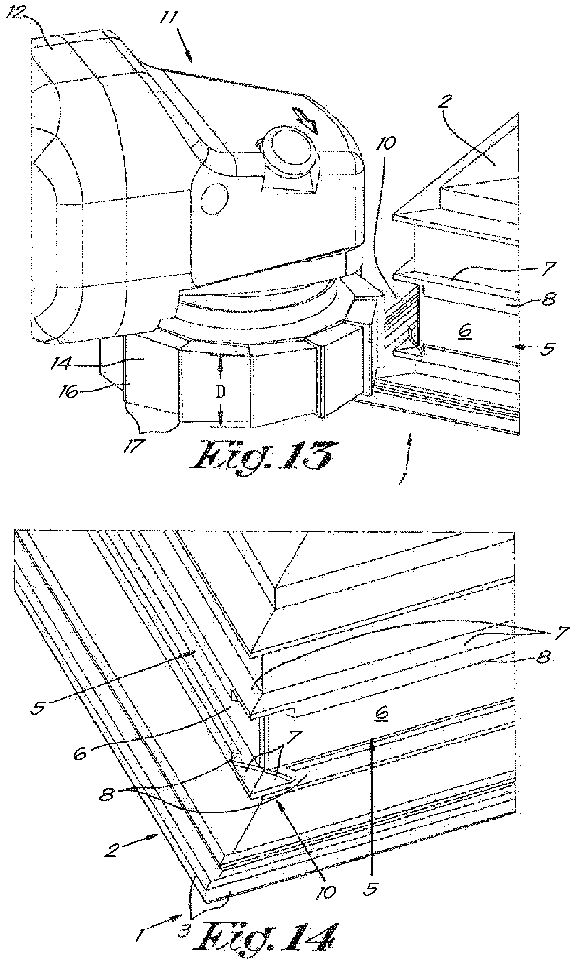

When the tool is used the tool 11 is positioned as shown in figure 10, engaging in, and essentially over, the fitting groove along the outer contour of the corner to be machined and the mobile part 13b of the tool 11 is moved together with the driven implement 14 in the direction of the corner to be machined 1 to thus open the fitting groove 5 in the corner 1 as shown in figure 13.

Preferably, the geometry of the tool 11 is intended to obtain a result as shown in figure 14.

To this end the geometric rotation-axis X-X' of the machining implement 14 is located in the median plane 29 of the open inner corner 24 of the base piece 13a and the rotation-axis X-X' extends parallel with both support surfaces 26 and thus parallel with the theoretical intersecting line Y-Y' of both support surfaces 26.

The guides 18 for guiding the mobile part 13a on the base piece 13b run parallel with said median plane 29 of the inner corner 24 between the support surfaces 26 of the base piece 13a, such that the mobile part 13b is slideable according to the direction of the mitre and the implement 14 ends up directly and symmetrically relative to the median plane 29 on the tip of the mitred corner 1.

The axial position of the implement 14 along the geometric rotation-axis X-X' is such that, with the tool 11 in the mounted use condition of figure 10, the machining outer contour 16 of the implement 14 is centered relative to the breadth of the fitting groove 5 such that on either side of the fitting groove 5 the same amount of material is removed when the implement 14 is used, which, however, can also be deviated from.

Preferably, along its machining outer contour 16, the implement 14 has a thickness D which is at least equal to said distance B between the upright legs 7 of the fitting groove 5, such that in the corner to be machined 1 the inwardly oriented ribs 8 of the fitting groove 5 are completely removed so as not to form an obstacle for sliding in the fitting.

Taking into account possible deviations due to manufacturing tolerances or an implement 14 that is not positioned 100% in the fitting groove 5, it is preferable that the thickness D is slightly more than the distance B, such that after use a part of the thickness of the upright legs 7 is also removed as shown in figure 14.

Preferably, the thickness D is not more than the distance between the sides facing away from each other of the upright legs 7 of the fitting groove 5, such that the legs 7 at least partly remain after using the tool.

Alternatively, the thickness D can also be more than the breadth B' of the fitting groove 5 measured on the outside, such that upright legs 7 are milled away over their entire thickness and thus no sharp edges remain on the milled corners of the upright legs 7.

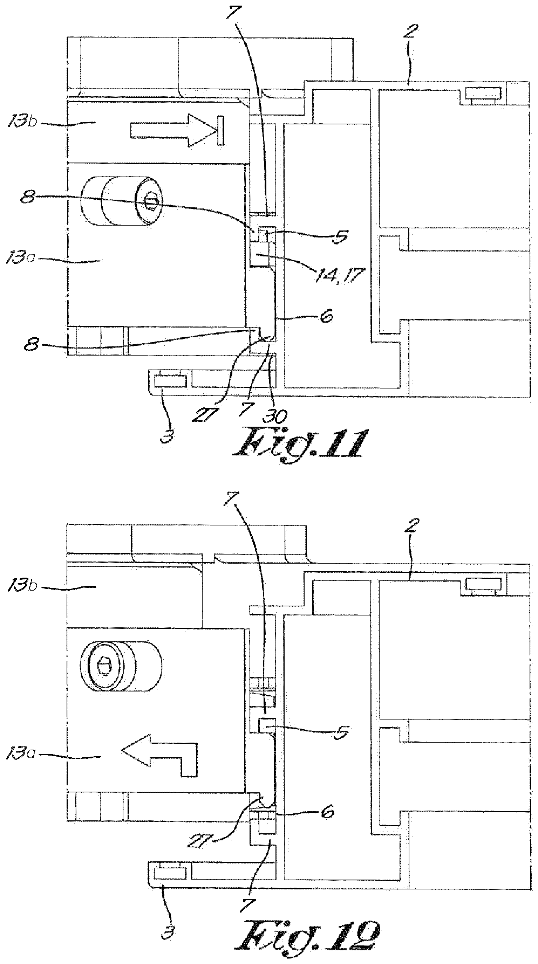

Preferably, the movable part 13b of the housing 13 is provided with a stop 30 which when the tool is used determines said end position of the movable part 13b relative to the corner to be machined 1, said end position being shown in figure 11, whereby the stop 30 is intended to come into contact with the outer contour 4 of the frame 2, preferably on the level of the bottom 6 of the fitting groove 5.

Preferably, the stop is such that in the end position, the machining outer contour 16 of the implement 14 extends beyond the theoretical intersecting line Y-Y' of the support surfaces 26 of the base piece 13b.

Preferably, the stop 30, in terms of height according to the direction X-X' is on the level of the hitching edge 27, such that the motion in the direction of the corner can only be started when the tool is completely hitched.

Consequently part of the corner 1 is also formed by the bottom 6 of the fitting groove 5 in the mitre joint to ensure that also in case of a mounting error of the mitre whereby the mitre is slightly shifted, the mitre is aligned because the part of the bottom 6 of one profile 3 that protrudes in relation to the other profile 3 is removed.

The use of the tool 11 is simple and is illustrated by means of figures 6 to 9, whereby the pre-assembled frame 2 of the leaf is preferably laid on a work surface or the like.

First the implement 14 is then hitched behind the lower rib 8 of the fitting groove with its hitching edges 27 of the base piece 13a of the housing as shown in figures 6 and 7.

Subsequently, the drive 12 of the tool is switched on and the mobile part 13b with the driven implement 14 is moved against the force of the spring 25 on the base piece 13a in the direction of the mitred corner to be machined, such that the fitting groove in the corners is milled increasingly deeper until the stop 30 arrives against the corner as shown in figure 11.

The operation is then ended and all that needs to be done is switch off the drive 12 and remove the implement 14 from the frame 2 by unhitching the tool from behind the ribs 8 of the fitting groove 5 as shown in figure 12.

The base piece 13 is then pushed forward by the spring 25 of the mobile part 13b into the resting position, such that the tool 11 is ready again for machining a next corner.

It is understood that the base piece of the tool can also be mounted and positioned on the frame 2 in other ways and that the mobile part does not necessarily have to be slideable, but can also be rotatably mounted on the base piece for example.

Different tools can be used such as a milling cutter, a saw, a sander or the like.

The tool can be provided with adjustment possibilities to be able to adjust the position of the mobile part 13b on the base piece 13a and the position of the implement 14 in the mobile part 13b as well as possibly the position of the stop to take into account profiles of a different form which may also determine the choice of the diameter and the thickness D of the implement 14.

The shown tool 11 is for the most common straight angle mitre, although the tool can also be adapted for other mitred corners.

It is also not excluded that the inner corner 24 enclosed by the support surfaces 26 is adjustable, for example by rotation of one or both jaws 23 around the centre of the chamber 19.

The present invention is by no means limited to the embodiment described as an example and shown in the drawing, but a tool according to the invention for machining the leaf of a window or door and of the use thereof in combination with a frame to be machined can be realised in all kinds of forms and dimensions without departing from the scope of the invention.

## Claims

1. Hand tool for machining a leaf of a window or door, whereby the leaf contains an aluminium frame (2) composed of profiles (3) which in the corners (1) of the frame (2) are mitred together and whereby the profiles (3) along the outer contour (4) of the frame (2) are provided with an undercut fitting groove (5) which is delimited by a bottom (6) and by two upright legs (7) which on the sides facing each other are provided with an inwardly oriented rib (8) which during the mounting of the frame (2) continues up to the mitre of the corners (a) and are provided for mounting a window or door fitting (9) which slideably fits in the fitting groove (5), **characterised in that** the tool (11) contains a housing (13) and a machining implement (14) that is rotatively mounted with bearings in the housing (13), whereby the housing (13) contains at least two parts, respectively a base piece (13a) for attaching the tool (11) across the fitting groove (5) along the outer contour of the corner (1) of the frame (2) to be machined and a mobile part (13b) movably mounted thereon in which the implement (14) is mounted with bearings and which, in a mounted condition of the tool (11) on the frame (2), from a resting position in which the implement (14) is removed from said corner (1) is movable in the direction of the corner (1) to remove the ribs (8) and/or upright edges (7) of the mitre in the corner (1) up to an end position of the mobile part (13b) in which parts of the fitting groove (5) are sufficiently removed with a rotating implement (14) to sufficiently open the fitting groove (5) of both profiles (3) at the same time in the corner (1) to slide in a fitting (9) from the outside of the frame (2) in an axial direction.

2. Tool according to claim 1, **characterised in that** the base piece (13a) is provided with support parts defining two support surfaces (26) which define an open inner corner (24) of the base piece (13a) with an opening angle (F) corresponding with the mitre angle (E) of the corner (1) of the frame (2) to be machined, wherein the support surfaces (26) are intended to rest on the outer contour (4) of the frame (2) when the tool (1) is used.

3. Tool according to claim 2, **characterised in that** the support surfaces(26) are intended to rest on the bottom (6) of the fitting groove (5) when the tool (1) is used and that the support parts have a breadth (C) that is less than the breadth (A) of the opening of the fitting groove (5) between the inwardly oriented ribs (8).

4. Tool according to claims 2 or 3, **characterised in that** the support parts are provided with a hitching edge (27) or other hitching parts with which the base piece can be hitched behind one of the ribs (8) of the fitting groove (5) for using the tool (1).

5. Tool according to any one of the claims 2 to 4, **characterised in that** the base piece (13a) is provided on the level of the inner corner (24) with a cut-away (28) for the implement (14) in said end position of the mobile part (13b) on the base piece (13a), whereby the cut-away (28) extends on either side of the median plane (29) of the inner corner (24) by an interruption of the support surfaces (26) up to a distance from said median plane (29).

6. Tool according to claim 5, **characterised in that** the mobile part (13b) is slideably mounted on the base piece (13a) by means of one or more guides (18) which run parallel with the median plane (29) of the inner corner (24) of the base piece (13a) and **in that** the implement (14) in the mobile part (13b) of the tool (11) is mounted with bearings around a geometric rotation axis (X-X') which is located in the median plane (29) of the open inner corner (24) of the base piece (13a) of the housing (13), whereby
the geometric rotation axis (X-X') of the implement (14) is parallel with the theoretical intersecting line (Y-Y') of both support surfaces (26).

7. Tool according to claim 6, **characterised in that** the axial position of the implement (14) on the geometric rotation axis (X-X') is such that with the tool (11) in a mounted use condition, the machining outer contour (16) of the implement (14) is centred relative to the breadth of the fitting groove (5).

8. Tool according to claim 7, **characterised in that** the implement (14) has a thickness (D) along its machining outer contour (16) equal to or slightly more than the distance (B) between the upright legs (7) of the fitting groove (5) for which the implement (14) is intended and/or is less than the distance between the sides facing away from each other of the upright legs (7) of the fitting groove (5).

9. Tool according to any one of the previous claims, **characterised in that** the movable part (13b) of the housing (13) is provided with a stop (30) which when the tool (11) is used determines said end position of the movable part (13b) relative to the corner of the frame (2) to be machined.

10. Tool according to claim 9, **characterised in that** the stop (30) is intended to come into contact with the outer contour (4) of the frame (2) when the tool (11) is used, for which purpose the height of the stop (30) preferably corresponds with the height of the hitching edge (27).

11. Tool according to any one of the previous claims, **characterised in that** it is provided with its own drive (12) for rotatively driving the machining implement (14) or with a seat for the drive, for example in the form of an angle grinder.

12. Tool according to claim 11, **characterised in that** the machining implement (14) is incorporated in a chamber (19) of the base piece (13a) with a detachable bottom (20) and upright walls (21) around the implement (14) and an upper wall (22) with a passage for the drive of the rotative implement (14).

13. Tool according to claim 12, **characterised in that** the chamber (19) is provided with a cut-away on the level of said cut-away (28) of the inner corner (24) of the base piece (13a) of the housing (13), said cut-away being provided over a certain breadth of the surrounding wall (21) as well as in the bottom (20) and in the upper wall (22) of the chamber (19).

14. Combination of an aluminium frame of a leaf of a window or door to be machined and of a hand tool for machining a corner of the frame, whereby the frame (2) to be machined is composed of profiles (3) which are mitred together in the corners (1) of the frame (2) and whereby the profiles (3) along the outer contour (4) of the frame (2) are provided with an undercut fitting groove (5) which is delimited by a bottom (6) and by two upright legs (7) which on the sides facing each other are provided with an inwardly oriented rib (8) which during the mounting of the frame (2) continues up to the mitre of the corners (1) and are provided for mounting a window or door fitting (9) which slideably fits in the fitting groove (5), **characterised in that** the tool (11) contains a housing (13) and a machining implement (14) that is rotatively mounted with bearings in the housing (13), whereby the housing (13) contains at least two parts, respectively a base piece (13a) for attaching the tool (11) across the fitting groove (5) along the outer contour of the corner (1) of the frame (2) to be machined and a mobile part (13b) movably mounted thereon in the form of an angle grinder in which the implement (14) is mounted with bearings and which, in a mounted condition of the tool (11) on the frame (2), from a resting position in which the implement (14) is removed from said corner (1) is movable in the direction of the corner (1) to remove the ribs (8) and/or upright edges (7) of the mitre in the corner (1) up to an end position of the mobile part (13b) in which parts of the fitting groove (5) are sufficiently removed with a rotating tool to sufficiently open the fitting groove (5) of both profiles (3) at the same in the corner (1) to be able to slide in a fitting (9) from the outside of the frame (2) in an axial direction.

15. Use of a tool according to one of the claims 1 to 21 for machining a corner of an aluminium frame of a leaf of a window or door, whereby the frame (2) is composed of profiles (3) which in the corners (1) of the frame (2) are mitred together and whereby the profiles (3) along the outer contour (4) of the frame (2) are provided with an undercut fitting groove (5) which is delimited by a bottom (6) and by two upright legs (7) which on the sides facing each other are provided with an inwardly oriented rib (8) which during the mounting of the frame (2) continues up to the mitre of the corners (1) and are provided for mounting a window or door fitting (9) which slideably fits in the fitting groove (5), **characterised in that** the tool (11) is used for opening the fitting groove in the corner (1) of the frame (2) by mounting the tool (11) in resting condition with the base piece (13a) across the fitting groove (5) along the outer contour of the corner (1) to be machined with the implement (14) removed from the corner (1) and by thereafter moving the mobile part (13b) with the rotating implement (14) from said resting position in the direction of the corner (1) to remove the ribs (8) and/or upright edges (7) of the mitre in the corner (1) up to an end position of the mobile part (13b) in which parts of the fitting groove (5) are sufficiently removed to sufficiently open the fitting groove (5) of both profiles (3) at the same time in the corner (1) to slide in a fitting (9) from the outside of the frame (2) in an axial direction.
